# FASCICULE DE BREVET EUROPEEN

(11) **EP 0 485 778 B1**
(45) Date de publication et mention de la délivrance du brevet: **12.04.1995**
(21) Numéro de dépôt: 91118150.1
(22) Date de dépôt: 24.10.1991
(51) Int. Cl.: B60C 11/11

(54) **Bande de roulement d'enveloppe de pneumatique à carcasse radiale pour véhicules poids lourds**
Radialreifenauffläche für Lastkraftwagen
Radial tyre tread for heavy goods vehicle

(30) Priorité: 15.11.1990 FR 9014344
(43) Date de publication de la demande: 20.05.1992
(73) Titulaire: COMPAGNIE GENERALE DES ETABLISSEMENTS MICHELIN - MICHELIN & CIE, 63040 Clermont-Ferrand Cédex (FR)
(72) Inventeur: Lurois, Patrick, Greenville, S.C. 29605 (US)
(74) Mandataire: Hiebel, Robert

(56) Documents cités:
- DE-A- 3 720 908
- FR-A- 2 382 348
- GB-A- 1 360 203
- US-A- 4 284 115
- PATENT ABSTRACTS OF JAPAN, vol. 12, no. 113 (M-683)[2960], 9 avril 1988;& JP-A-62 241 708 (OHTSU TIRE & RUBBERCO., LTD) 22-10-1987

## Description

La présente invention est relative à une bande de roulement pour enveloppes de pneumatiques à carcasse radiale et en particulier pour poids-lourds destinées à circuler aussi bien sur route qu'en terrains variés.

L'expérience montre que les bandes de roulement de pneumatiques à carcasse radiale pour poids-lourds destinées à des roulages mixtes route - chantier subissent, en raison des contraintes sévères auxquelles elles sont soumises, d'une part une usure importante des zones latérales qui se matérialise par un effondrement des bords de la bande de roulement, d'autre part une usure anormale en dents de scie. Ces deux types d'usure sont particulièrement importants sur les bandes de roulement des pneus montés sur les essieux moteur du véhicule que ce soit en montage simple ou en jumelé.

Ces deux types d'usure sont d'autant plus importants que la bande de roulement comporte essentiellement des blocs individuels procurant une meilleure adhérence sur sol meuble au détriment d'une usure accélérée sur route.

Pour réduire une usure anormale d'une bande de roulement constituée de blocs individuels séparés les uns des autres par des rainures, il a été proposé dans la demande de brevet anglais GB-A-2 008 043 de disposer des ponts de gomme dans les rainures transversales latérales munis d'une fine incision et ce de part et d'autre d'une étroite rainure circonférentielle de même profondeur que les deux rainures circonférentielles larges séparant deux blocs adjacents dans le sens transversal.

Une telle solution assure certes un gain en usure en raison de l'effet de pontage qui s'opère entre les blocs dans l'aire de contact avec le sol mais au détriment de l'adhérence sur terrain varié et ce sans empêcher un effondrement assez rapide des bords de la bande de roulement.

Une bande de roulement présentant les caractéristiques du préambule de la revendication 1 est décrite, par exemple, dans DE-A-3 720 908.

La présente invention vise à réaliser une bande de roulement pour enveloppe de pneumatique à carcasse radiale destinée à un roulage mixte route-chantier qui retarde considérablement l'apparition à la fois de l'effondrement des zones latérales de la bande de roulement et de l'usure anormale en dents de scie tout en réduisant le niveau général d'usure de la bande de roulement. La présente invention vise aussi un pneu poids lourds à carcasse radiale possédant une bande de roulement conforme à l'invention.

La bande de roulement selon l'invention qui comporte au moins une rainure en ligne brisée d'orientation générale circonférentielle et des rainures d'orientation générale transversale délimitant au moins deux rangées de blocs individuels est caractérisée en ce que les rainures d'orientation générale transversale larges présentent des parois ayant une inclinaison constante et symétrique par rapport à la normale à la bande de roulement sur une zone médiane s'étendant de part et d'autre du plan médian de la bande de roulement sur une largeur comprise entre 40 % et 75 % de la largeur de la bande de roulement et au-delà de ladite zone médiane et jusqu'aux bords de la bande de roulement possèdent des parois présentant une inclinaison variable et dissymétrique, et en ce que deux rainures latérales étroites d'orientation générale circonférentielle sont situées dans les zones latérales de la bande de roulement à une distance des bords ne dépassant pas le tiers de la largeur de la bande de roulement et possèdent une profondeur inférieure à celle des rainures en ligne brisée d'orientation générale transversale comprise entre 10 % et 70 % de la profondeur desdites rainures.

La largeur de la bande de roulement est la distance située entre les bords des blocs latéraux lorsqu'ils ont une arête vive ou la distance mesurée entre les points d'intersection des tangentes à la surface de la bande de roulement en contact avec le sol d'une part et aux bords latéraux de la bande de roulement d'autre part. La largeur des rainures est mesurée perpendiculairement à au moins une des parois à la surface de la bande de roulement en contact avec le sol.

La ou les rainures centrales d'orientation générale circonférentielle peuvent avoir ou non la même profondeur que les rainures d'orientation générale transversale. Les deux rainures circonférentielles latérales étroites disposées dans les blocs de gomme latéraux disposés près des bords de la bande de roulement ont une largeur comprise entre 1 % et 3 % de la largeur de la bande de roulement.

La largeur des rainures d'orientation générale transversale est comprise entre 1 % et 3 % du diamètre extérieur de l'enveloppe de pneumatique neuve montée sur une roue appropriée, gonflée et chargée aux conditions nominales. L'angle d'inclinaison des parois des rainures transversales ayant une inclinaison symétrique par rapport à la normale à la surface de la bande de roulement est celui habituellement utilisé pour ce type de pneus, c'est-à-dire généralement compris entre 10° et 20° et de préférence 15°.

Pour les parties latérales des rainures larges d'orientation transversale, ce qui est essentiel, c'est la dissymétrie de l'inclinaison des deux parois constituant les rainures larges d'orientation transversale par rapport au sens de la variation de l'inclinaison variable de chacune des parois. La valeur des angles d'inclinaison des bords d'attaque et des bords de fuite peut être quelconque à condition de respecter une dissymétrie des valeurs entre les deux parois, en particulier les angles d'inclinaison peuvent avoir une inclinaison positive ou négative, c'est-à-dire en contre-dépouille. Les blocs délimités par les rainures peuvent avoir une forme géométrique quelconque. Suivant des dispositions prérérentielles :
- l'enveloppe de pneumatique comporte deux rainures circonférentielles,
- les rainures transversales larges sont en ligne brisée,
- l'inclinaison de l'une des parois des rainures transversales varie de manière continue de 15° au droit de la jonction avec la partie médiane ayant une inclinaison constante et symétrique jusqu'à 25° sur le bord de la bande de roulement tandis que l'inclinaison de la paroi latérale qui est directement opposée et en regard de la précédente varie de 15° au droit de la jonction avec la partie médiane ayant une inclinaison constante et symétrique jusqu'à 5° sur le bord de la bande de roulement,
- la différence d'inclinaison entre les deux extrémités des parois des rainures transversales atteint au maximum 20°,
- tous les blocs de la bande de roulement délimités par les rainures ont un angle saillant constituant la paroi du bord d'attaque des blocs délimitant les rainures transversales,
- tous les blocs de la bande de roulement ont un angle rentrant constituant la paroi du bord de fuite des blocs délimitant les rainures transversales,
- la paroi ayant l'inclinaison variable relative la plus faible constitue le bord de fuite des blocs latéraux et celle ayant l'inclinaison relative la plus forte constitue le bord d'attaque desdits blocs latéraux,
- la valeur de l'angle d'inclinaison des bords des parois ayant une inclinaison constante et symétrique est inférieure ou au plus égale à celle de l'angle d'inclinaison des bords d'attaque de la portion des rainures transversales ayant des parois d'inclinaison dissymétrique et est égale ou supérieure à celle de l'angle d'inclinaison des bords de fuite de la portion des rainures transversales ayant des parois d'inclinaison dissymétrique,
- la rainure circonférentielle latérale étroite est disposée au milieu des blocs latéraux voisins des bords de la bande de roulement,
- la rainure circonférentielle latérale étroite relie le sommet de l'angle saillant constituant l'une des parois des blocs au sommet de l'angle rentrant constituant la paroi opposée des blocs,
- la rainure circonférentielle latérale étroite est au droit de la ligne de jonction des extrémités des parois ayant une inclinaison symétrique par rapport à la normale à la bande de roulement et des parois ayant une inclinaison dissymétrique,
- la rainure circonférentielle latérale étroite a une profondeur comprise entre 15 % et 25 % de la profondeur des rainures transversales larges.

L'invention est illustrée de manière non limitative par les figures de l'exemple de réalisation décrit. La figure 1 représente une vue en plan d'un secteur d'une bande de roulement conforme à l'invention. La figure 2 représente en coupe selon la ligne I-I une bande de roulement selon l'invention. Les figures 3 a, b, c représentent selon la ligne II-II une rainure transversale en coupe selon les lignes a/a, b/b et c/c. La figure 4 représente en coupe une autre forme d'exécution des parois latérales des rainures transversales ayant une inclinaison dissymétrique avec l'une des parois en contre-dépouille.

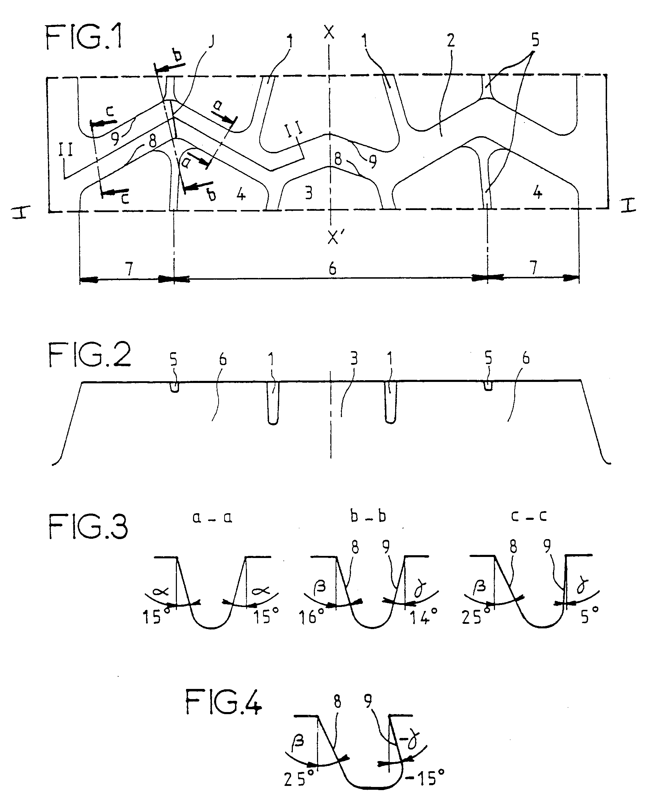

La figure 1 représente une bande de roulement d'un pneumatique poids-lourds de dimension 11 R 22,5 constitué par une carcasse radiale dont les extrémités sont enroulées autour d'une tringle disposée dans les bourrelets du pneu et une armature de sommet constituée d'une pluralité de nappes de câbles métalliques croisées symétriquement l'une par rapport à l'autre.

La bande de roulement comporte deux rainures centrales circonférentielles en ligne brisée (1) étroites ayant une largeur de 2,8 % situées de part et d'autre et à proximité du plan médian à une distance représentant 25 % de la largeur de la bande de roulement, et une pluralité de rainures transversales larges (2) en ligne brisée, ayant une largeur de 1,5 % du diamètre extérieur de l'enveloppe de pneumatique, délimitant des blocs centraux (3) et des blocs latéraux (4) en forme de pointe de flèche. La profondeur des rainures circonférentielles centrales (1) et des rainures transversales (2) est identique. Une rainure circonférentielle étroite (5) ayant une profondeur de 1,7 % de la profondeur des rainures transversales 2, comme montré à la figure 2, est disposée au milieu des blocs latéraux 4 à une distance des bords de la bande de roulement qui représente 19 % de la largeur de la bande de roulement et relie dans le sens circonférentiel les deux faces opposées des blocs latéraux.

Les rainures transversales larges en ligne brisée (2) possèdent sur la partie médiane (6) disposée de part et d'autre de l'axe X-X de la bande de roulement et délimitée par les rainures circonférentielles étroites (5) des parois dont l'inclinaison est symétrique par rapport à la normale à la surface de la bande de roulement comme cela apparaît sur la figure 3a au niveau de la coupe a/a et ce sur une distance de 64 % de la largeur de la bande de roulement. L'angle d'inclinaison α est celui classiquement utilisé sur les enveloppes de pneumatiques poids-lourds, c'est-à-dire 15°. Les rainures transversales (2) possèdent dans les zones latérales (7) disposées de part et d'autre de la zone médiane (6) des parois opposées dissymétriques dont l'inclinaison varie de la ligne de jonction J délimitant les extrémités ayant une inclinaison symétrique et constante des parois jusque vers les bords de la bande de roulement. Les bords (8) des blocs (6) constitués par l'angle saillant forment les bords d'attaque des blocs (4) tandis que les bords opposés (9) constitués par l'angle rentrant forment les bords de fuite des blocs. Comme on le voit sur les figures 3b et 3c l'angle l'inclinaison β par rapport à la normale à la surface de la bande de roulement des bords d'attaque (8) des parois des rainures (2) varie de façon continue d'un angle ayant une valeur de 15° au droit de la ligne de jonction J, à un angle ayant une valeur de 25° aux bords de la bande de roulement. L'inclinaison γ des bords de fuite (9) des parois des rainures (2) varie de façon continue d'un angle d'une valeur de 15° au droit de la ligne de jonction J à un angle d'une valeur de 5° aux bords de la bande de roulement.

La figure 4 représente une variation d'exécution des parois latérales des rainures transversales ayant une paroi d'attaque (8) avec un angle d'inclinaison positif et une paroi de fuite (9) en contre-dépouille, c'est-à-dire ayant un angle d'inclinaison γ négatif ayant une valeur de - 15°.

Un essai comparatif est effectué avec des pneus gonflés et chargés aux conditions nominales. Un pneu de dimension 11 R 22,5 ayant une bande de roulement conforme à l'invention a été comparé à un pneu témoin ayant la même constitution à l'exception de la bande de roulement. Les pneus ont été montés en jumelé, côté intérieur sur l'essieu moteur d'un véhicule poids-lourd et soumis à un roulage mixte sur route goudronnée pour 90 % du kilométrage parcouru et sur terrains variés non goudronnés pour 10 % du kilométrage parcouru sur une distance de 60 000 km. Au terme de ce roulage, les différences de hauteur de gomme des deux bandes de roulement ont été mesurées sur les bords, au centre et à mi-distance entre les bords et le centre de la bande de roulement.

Par rapport aux hauteurs des bandes de roulement neuves, la bande de roulement du pneu témoin présente une différence de hauteur de 6 mm entre le bord et le point considéré à mi-distance et une différence de hauteur de 3 mm entre le point considéré à mi-distance et le centre tandis que pour la bande de roulement du pneu conforme à l'invention, les différences de hauteur sont respectivement de 2 mm et 1 mm. En outre, la bande de roulement du pneu témoin présente un important effondrement des bords avec une usure en dents de scie et une usure en creux notamment dans la zone médiane tandis que la bande de roulement conforme à l'invention présente une moindre usure, de l'ordre du tiers, qui est régulièrement distribuée sur toute sa largeur.

Les résultats d'essai montrent clairement que la bande de roulement conforme à l'invention permet de retarder de manière très substantielle l'apparition d'un effondrement des bords de la bande de roulement, l'apparition d'usure irrégulière en dents de scie et d'accroître la longévité du bandage.

## Revendications

1. Bande de roulement de pneumatique pour véhicules poids-lourds comportant au moins une rainure en ligne brisée d'orientation générale circonférentielle (1) et des rainures d'orientation générale transversale larges (2) délimitant au moins deux rangées de blocs individuels, caractérisée en ce que les rainures d'orientation générale transversale larges (2) présentent des parois ayant une inclinaison constante et symétrique par rapport à la normale à la bande de roulement sur une zone médiane (6) s'étendant de part et d'autre du plan médian de la bande de roulement sur une largeur comprise entre 40 % et 75 % de la largeur de la bande de roulement et au-delà de ladite zone médiane et jusqu'aux bords de la bande de roulement possèdent des parois présentant une inclinaison variable et dissymétrique d'une paroi à l'autre, et en ce que deux rainures latérales étroites d'orientation générale circonférentielle (5) sont situées dans les zones latérales (7) de la bande de roulement à une distance des bords ne dépassant pas le tiers de la largeur de la bande de roulement et ayant une profondeur inférieure à celle des rainures d'orientation générale transversale comprise entre 10 % et 70 % de la profondeur desdites rainures.

2. Bande de roulement selon la revendication 1, caractérisée en ce que l'angle d'inclinaison des rainures transversales (2) au-delà de la zone médiane (6) varie en valeur absolue en sens contraire entre les bords d'attaque et les bords de fuite.

3. Bande de roulement selon l'une quelconque des revendications 1 et 2, caractérisée en ce que l'angle d'inclinaison des parois des rainures transversales (2) au-delà de la zone médiane (6) augmente en valeur absolue sur l'un des bords des parois desdites rainures et diminue en valeur absolue sur le bord opposé des parois desdites rainures en direction des bords de la bande de roulement.

4. Bande de roulement selon l'une quelconque des revendications 1, 2, et 3, caractérisée en ce que les bords d'attaque (8) des parois des rainures transversales (2) au-delà de la zone médiane (6) possèdent un angle d'inclinaison minimal égal ou supérieur à l'angle maximal d'inclinaison des bords de fuite (9) desdites rainures.

5. Bande de roulement selon la revendication 4, caractérisée en ce que l'un des bords des parois des rainures transversales (2) au-delà de la zone médiane (6) possède un angle d'inclinaison ayant une valeur absolue positive et croissante et le bord opposé possède un angle d'inclinaison décroissant variant d'une valeur d'angle positive à une valeur d'angle négative.

6. Bande de roulement selon l'une quelconque des revendications 1, 2, 3 et 4, caractérisée en ce que la profondeur des rainures latérales étroites (5) est comprise entre 15 et 25 % de la profondeur des rainures transversales (2).

7. Bande de roulement selon l'une quelconque des revendications 1, 2, 3, 4, 5 et 6, caractérisée en ce que les rainures latérales étroites (5) situées dans les zones latérales (7) sont disposées au milieu des blocs latéraux et débouchent dans les rainures transversales (2).

8. Bande de roulement selon l'une quelconque des revendications 1, 2, 3, 4, 5, 6 et 7, caractérisée en ce qu'elle comporte deux rainures en ligne brisée d'orientation générale circonférentielle (1).

9. Enveloppe de pneumatique poids lourd à carcasse radiale dont la bande de roulement comporte au moins une rainure en ligne brisée d'orientation générale circonférentielle (1) et des rainures d'orientation générale transversale larges (2) délimitant au moins deux rangées de blocs individuels, caractérisée en ce que les rainures d'orientation générale transversale larges (2) présentent des parois ayant une inclinaison constante et symétrique par rapport à la normale à la bande de roulement sur une zone médiane (6) s'étendant de part et d'autre du plan médian de la bande de roulement sur une largeur comprise entre 40 % et 75 % de la largeur de la bande de roulement et au-delà de ladite zone médiane et jusqu'aux bords de la bande de roulement possèdent des parois présentant une inclinaison variable et dissymétrique d'une paroi à l'autre, et en ce que deux rainures latérales étroites d'orientation générale circonférentielle (5) sont situées dans les zones latérales (7) de la bande de roulement à une distance des bords ne dépassant pas le tiers de la largeur de la bande de roulement et ayant une profondeur inférieure à celle des rainures d'orientation générale transversale comprise entre 10 % et 70 % de la profondeur desdites rainures.

10. Enveloppe de pneumatique selon la revendication 9, caractérisée en ce que l'angle d'inclinaison des rainures transversales (2) au-delà de la zone médiane (6) varie en valeur absolue en sens contraire entre les bords d'attaque (8) et les bords de fuite (9).

11. Enveloppe de pneumatique selon l'une quelconque des revendications 9 et 10, caractérisée en ce que l'angle d'inclinaison des parois des rainures transversales (2) au-delà de la zone médiane (6) augmente en valeur absolue sur l'un des bords des parois desdites rainures et diminue en valeur absolue sur le bord opposé des parois desdites rainures en direction des bords de la bande de roulement.

12. Enveloppe de pneumatique selon l'une quelconque des revendications 9, 10 et 11, caractérisée en ce que les bords d'attaque (8) des parois des rainures transversales (2) au-delà de la zone médiane (6) possèdent un angle d'inclinaison minimal égal ou supérieur à l'angle maximal d'inclinaison des bords de fuite desdites rainures.

13. Enveloppe de pneumatique selon l'une quelconque des revendications 9, 10, 11 et 12, caractérisée en ce que les bords d'attaque (8) des parois des rainures transversales (2) possèdent un angle d'inclinaison minimal égal ou supérieur à l'angle maximal d'inclinaison des bords de fuite (9) desdites parois.

## Claims

1. A tyre tread for heavy vehicles which has at least one broken-line groove of generally circumferential orientation (1) and wide grooves of generally transverse orientation (2) defining at least two rows of individual blocks, characterised in that the wide grooves of generally transverse orientation (2) have walls of an inclination which is constant and symmetrical with respect to the normal to the tread over a median zone (6) extending on both sides of the median plane of the tread over a width of between 40% and 75% of the width of the tread and possess, beyond said median zone and up to the edges of the tread, walls having a variable and asymmetrical inclination from one wall to the other, and in that two narrow side grooves of generally circumferential orientation (5) are located in the side zones (7) of the tread at a distance from the edges not exceeding one third of the width of the tread and having a depth less than that of the grooves of generally transverse orientation of between 10% and 70% of the width of said grooves.

2. A tread according to Claim 1, characterised in that the angle of inclination of the transverse grooves (2) beyond the median zone (6) varies in absolute value in opposite direction between the leading edges and the trailing edges.

3. A tread according to any one of Claims 1 and 2, characterised in that the angle of inclination of the walls of the transverse grooves (2) beyond the median zone (6) increases in absolute value on one of the edges of the walls of said grooves and decreases in absolute value on the opposite edge of the walls of said grooves in the direction of the edges of the tread.

4. A tread according to any one of Claims 1, 2 and 3, characterised in that the leading edges (8) of the walls of the transverse grooves (2) beyond the median zone (6) have a minimum angle of inclination equal to or greater than the maximum angle of inclination of the trailing edges (9) of said grooves.

5. A tread according to Claim 4, characterised in that one of the edges of the walls of the transverse grooves (2) beyond the median zone (6) has an angle of inclination having an increasing positive absolute value and the opposite edge has a decreasing angle of inclination varying from a positive value of angle to a negative value of angle.

6. A tread according to any one of Claims 1, 2, 3 and 4, characterised in that the depth of the narrow side grooves (5) is between 15 and 25% of the depth of the transverse grooves (2).

7. A tread according to any one of Claims 1, 2, 3, 4, 5 and 6, characterised in that the narrow side grooves (5) located in the side zones (7) are arranged in the middle of the side blocks and open into the transverse grooves (2).

8. A tread according to any one of Claims 1, 2, 3, 4, 5, 6 and 7, characterised in that it comprises two broken-line grooves of generally circumferential orientation (1).

9. A radial carcass heavy-vehicle tyre, the tread of which has at least one broken-line groove of generally circumferential orientation (1) and wide grooves of generally transverse orientation (2) defining at least two rows of individual blocks, characterised in that the wide grooves of generally transverse orientation (2) have walls having a constant, symmetrical inclination with respect to the normal to the tread over a median zone (6) extending on both sides of the median plane of the tread over a width of between 40% and 75% of the width of the tread and have, beyond said median zone and up to the edges of the tread, walls having a variable, asymmetrical inclination from one wall to the other, and in that two narrow side grooves of generally circumferential orientation (5) are located in the side zones (7) of the tread at a distance from the edges not exceeding one third of the width of the tread and having a depth less than that of the grooves of generally transverse orientation of between 10% and 70% of the depth of said grooves.

10. A tyre according to Claim 9, characterised in that the angle of inclination of the transverse grooves (2) beyond the median zone (6) varies in absolute value in opposite direction between the leading edges (8) and the trailing edges (9).

11. A tyre according to any one of Claims 9 and 10, characterised in that the angle of inclination of the walls of the transverse grooves (2) beyond the median zone (6) increases in absolute value on one of the edges of the walls of said grooves and decreases in absolute value on the opposite edge of the walls of said grooves in the direction of the edges of the tread.

12. A tyre according to any one of Claims 9, 10 and 11, characterised in that the leading edges (8) of the walls of the transverse grooves (2) beyond the median zone (6) have a minimum angle of inclination equal to or greater than the maximum angle of inclination of the trailing edges of said grooves.

13. A tyre according to any one of Claims 9, 10, 11 and 12, characterised in that the leading edges (8) of the walls of the transverse grooves (2) have a minimum angle of inclination equal to or greater than the maximum angle of inclination of the trailing edges (9) of said walls.

## Patentansprüche

1. Laufstreifen für Luftreifen für Schwerlastfahrzeuge, der mindestens eine in einer gebrochenen Linie verlaufende und im wesentlichen in Umfangsrichtung orientierte Umfangsrille (1) und im wesentlichen in Querrichtung orientierte breite Querrillen (2) aufweist, die mindestens zwei Reihen individueller Profilstollen begrenzen,
dadurch gekennzeichnet, daß
die im wesentlichen in Querrichtung orientierten breiten Querrillen (2) in einem medianen Bereich (6), der sich zu beiden Seiten der Mittelebene des Laufstreifens über eine Breite von 40 bis 75 % der Breite des Laufstreifens erstreckt, Wände mit konstanter und in Bezug auf die Normalrichtung zum Laufstreifen symmetrischer Neigung und außerhalb des medianen Bereichs und bis zu den Rändern des Laufstreifens Wände mit veränderlicher und von einer Wand zur anderen unsymmetrischer Neigung aufweisen
und
in den Seitenbereichen (7) des Laufstreifens in einem Abstand von den Rändern des Laufstreifens, der ein Drittel der Breite des Laufstreifens nicht übersteigt, zwei im wesentlichen in Umfangsrichtung orientierte seitliche schmale Umfangsrillen (5) vorgesehen sind, deren Tiefe kleiner ist als die Tiefe der im wesentlichen in Querrichtung orientierten Querrillen und 10 bis 70 % der Tiefe dieser Querrillen beträgt.

2. Laufstreifen nach Anspruch 1, dadurch gekennzeichnet, daß sich der Absolutwert des Neigungswinkels der Querrillen (2) außerhalb des medianen Bereichs (6) von der Angriffskante zur Hinterkante in entgegengesetztem Sinn ändert.

3. Laufstreifen nach Anspruch 1 oder 2, dadurch gekennzeichnet, daß sich der Absolutwert des Neigungswinkels der Wände der Querrillen (2) außerhalb des medianen Bereichs (6) in Richtung auf die Ränder des Laufstreifens an einer ihrer beiden Kanten vergrößert und an der ihr gegenüberliegenden Kante verringert.

4. Laufstreifen nach einem der Ansprüche 1 bis 3, dadurch gekennzeichnet, daß der Minimalwert des Neigungswinkels der Angriffskanten (8) der Wände der Querrillen (2) außerhalb des medianen Bereichs (6) mindestens gleich dem Maximalwert des Neigungswinkels der Hinterkanten (9) der Querrillen ist.

5. Laufstreifen nach Anspruch 4, dadurch gekennzeichnet, daß eine der Kanten der Wände der Querrillen (2) außerhalb des medianen Bereichs (6) einen Neigungswinkel aufweist, dessen Absolutwert positiv ist und ansteigt, und die gegenüberliegende Kante einen abnehmenden Neigungswinkel aufweist, der sich von einem positiven Wert in einen negativen Wert ändert.

6. Laufstreifen nach einem der Ansprüche 1 bis 4, dadurch gekennzeichnet, daß die Tiefe der schmalen seitlichen Umfangsrillen (5) 15 bis 25 % der Tiefe der Querrillen (2) beträgt.

7. Laufstreifen nach einem der Ansprüche 1 bis 6, dadurch gekennzeichnet, daß die schmalen seitlichen Querrillen (5), die sich in den Seitenbereichen (7) befinden, in der Mitte der seitlichen Profilblöcke vorgesehen sind und in die Querrillen (2) münden.

8. Laufstreifen nach einem der Ansprüche 1 bis 7, dadurch gekennzeichnet, daß er zwei in einer gebrochenen Linie verlaufende und im wesentlichen in Umfangsrichtung orientierte Umfangsrillen (1) aufweist.

9. Luftreifen mit Radialkarkasse für Schwerlastfahrzeuge, dessen Laufstreifen mindestens eine in einer gebrochenen Linie verlaufende und im wesentlichen in Umfangsrichtung orientierte Umfangsrille (1) und im wesentlichen in Querrichtung orientierte breite Querrillen (2) aufweist, die mindestens zwei Reihen individueller Profilblöcke begrenzen,
dadurch gekennzeichnet, daß
die im wesentlichen in Querrichtung orientierten breiten Querrillen (2) in einem medianen Bereich (6), der sich zu beiden Seiten der Mittelebene des Laufstreifens über eine Breite von 40 bis 75 % der Breite des Laufstreifens erstreckt, Wände mit konstanter und in Bezug auf die Normalrichtung zum Laufstreifen symmetrischer Neigung und außerhalb des medianen Bereichs und bis zu den Rändern des Laufstreifens Wände mit veränderlicher und von einer Wand zur anderen unsymmetrischer Neigung aufweisen
und
in den Seitenbereichen (7) des Laufstreifens in einem Abstand von den Rändern des Laufstreifens, der ein Drittel der Breite des Laufstreifens nicht übersteigt, zwei im wesentlichen in Umfangsrichtung orientierte seitliche schmale Umfangsrillen (5) vorgesehen sind, deren Tiefe kleiner ist als die Tiefe der im wesentlichen in Querrichtung orientierten Querrillen und 10 bis 70 % der Tiefe dieser Querrillen beträgt.

10. Luftreifen nach Anspruch 9, dadurch gekennzeichnet, daß sich der Absolutwert des Neigungswinkels der Querrillen (2) außerhalb des medianen Bereichs (6) von der Angriffskante zur Hinterkante (9) in entgegengesetztem Sinn ändert.

11. Luftreifen nach Anspruch 9 oder 10, dadurch gekennzeichnet, daß sich der Absolutwert des Neigungswinkels der Wände der Querrillen (2) außerhalb des medianen Bereichs (6) in Richtung auf die Ränder des Laufstreifens an einer ihrer beiden Kanten vergrößert und an der ihr gegenüberliegenden Kante verringert.

12. Luftreifen nach einem der Ansprüche 9 bis 11, dadurch gekennzeichnet, daß der Minimalwert des Neigungswinkels der Angriffskanten (8) der Wände der Querrillen (2) außerhalb des medianen Bereichs (6) mindestens gleich dem Maximalwert des Neigungswinkels der Hinterkanten der Querrillen ist.

13. Luftreifen nach einem der Ansprüche 9 bis 12, dadurch gekennzeichnet, daß der Minimalwert des Neigungswinkels der Angriffskanten der Wände der Querrillen (2) mindestens gleich dem Maximalwert des Neigungswinkels der Hinterkanten (9) der Wände der Querrillen ist.
